# EUROPEAN PATENT APPLICATION

(11) **EP 2 551 520 A1**
(43) Date of publication of application: **30.01.2013**
(21) Application number: 11176050.0
(22) Date of filing: 29.07.2011
(51) Int. Cl.: F04B 7/06, F04B 15/04, F04B 53/14, F02M 59/44

(54) **Ceramic plunger with at least one control element**

(71) Applicant: Caterpillar Motoren GmbH & Co. KG, 24159 Kiel (DE)
(72) Inventor: Von der Osten-Sack, Andreas, 24145 Kiel (DE)
(74) Representative: Kramer - Barske - Schmidtchen

(57) **Abstract**

A plunger (50) for axial movement and rotation within a pump barrel (71) of a fuel pump (100) comprises a substantially cylindrically shaped plunger shaft (51) made of a ceramic material, and at least one control element (54) for controlling a rotational angle of the plunger (50). The at least one control element (54) is attached to the plunger shaft (51).

## Description

### Technical Field

The present disclosure generally refers to fuel pumps and more particularly to fuel pumps using a plunger.

### Background

As known in the art, e.g. from EP 2 339 166 A1, fuel pumps may use a plunger. Fuel pumps using a plunger may be, for example, high pressure pumps that can be used in connection with marine engines, construction machine engines, or other large engines.

Fuel pumps typically have a pump housing containing a pump barrel and a plunger, which define a pumping chamber. Further, fuel pumps have a control for adjusting the fuel supply volume, which is supplied from the fuel pump to the engine in accordance with a current load condition. Fuel pumps can be controlled mechanically or electrically, e.g., by an electric signal.

Further, fuel pumps can be operated with any kind of fuel, including alternative fuels used as a substitute for diesel fuels (DFO), light fuel oil (LFO) and heavy fuel oil (HFO), or low sulphur fuels.

Alternative fuels include first generation biofuels (e.g. palm oil, canola oil, oils based on animal fat) and second generation biofuels (e.g. oils made of non food corps, i.e. waste biomass). Examples of second generation biofuel include "pyrolysis oils" obtained from the pyrolysis of, e.g., wood or agricultural wastes, such as the stalks of wheat or corn, grass, wood, wood shavings, grapes, and sugar cane.

The chemical composition and the physical properties of alternative fuels such as pyrolysis oils and of low sulphur fuels can differ significantly from those of DFO, LFO, and HFO, in particular with respect to the high content of water and oxygen, the acidic pH-value in the range around, e.g., 2 to 3.5, and the rather low heating value. Moreover, alternative fuels and low sulphur fuels can have poor or completely missing lubrication properties and usually comprise small size particles in the range of, e.g., 0.1-5µm. In addition, the temperature of use is generally lower for alternative fuels and low sulphur fuels than for, e.g., HFO. A temperature of use of 60°C is common for pyrolysis oil to provide a viscosity, which is suitable for fuels to be injected into a combustion chamber of an engine.

The present disclosure is directed, at least in part, to improving or overcoming one or more aspects of prior systems.

### Summary of the Disclosure

According to a first aspect of the present disclosure, a plunger for axial movement and rotation within a pump barrel of a fuel pump comprises a, e.g., substantially cylindrically shaped, plunger shaft made of a ceramic material, and at least one control element for controlling a rotational angle of the plunger. The at least one control element is attached to the plunger shaft.

According to a second aspect of the present disclosure, a fuel pump comprises a plunger having a plunger shaft made of a ceramic material, and at least one control element for controlling a rotational angle of the plunger, the at least one control element being attached to the plunger shaft.

A plunger according to the present disclosure may be wear resistant, e.g., resistant against aggressive alternative fuels, low sulphur fuels or sulphur free fuels. Further, the fuel supply volume of a fuel pump using such a plunger may reliably controlled by mechanical control. Accordingly, life-time of a fuel pump using a plunger according to the present disclosure may be extended and control of the fuel supply volume of such a fuel pump may be facilitated.

Other features and aspects of this disclosure will be apparent from the following description and the accompanying drawings.

### Brief Description of the Drawings

Fig. 1 is a front view of a fuel pump;

Fig. 2 is a plan view of the fuel pump of Fig. 1;

Fig. 3 is a cross-sectional view taken along III-III in Fig. 1;

Fig. 4 is a schematical cross-sectional view taken along IV-IV in Fig. 2 and Fig. 5;

Fig. 5 is a schematical cross-sectional view taken along V-V in Fig. 1, Fig. 2 and Fig.4;

Fig. 6 is a side view of a plunger according to a first embodiment of the present disclosure;

Fig. 7 is another side view of the plunger according to the first embodiment partially showing the cross-section along VII-VII of Fig. 6;

Fig. 8 is a cross-sectional view through the plunger according to the first embodiment along VIII-VIII in Fig. 6;

Fig. 9 is a side view of a plunger according to a second embodiment of the present disclosure;

Fig. 10 is another side view of the plunger according to the second embodiment partially showing the cross-section along X-X of Fig. 9; and

Fig. 11 is a cross-sectional view through the plunger according to the second embodiment along XI-XI in Fig. 9.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure refers to fuel pumps having a plunger. In particular, the present disclosure refers to fuel pumps having a plunger which may supply fuel from a fuel reservoir to a fuel injector in that the plunger is axially moveable within a pump barrel of the fuel pump, e.g., by use of the rotational motion of a camshaft of the engine.

The present disclosure is based on the realization that engines operated with alternative fuels or low sulphur fuels or even sulphur free fuels may require the use of plungers made of a material, such as a ceramic material, resisting aggressive alternative fuels and aggressive low sulphur or sulphur free fuels. Ceramic material, however, may be very brittle and break easily. Accordingly, plungers integrally made of ceramic material, e.g., made from one piece, restrict mechanical control of the plunger. That is why plungers made of ceramic material are commonly electrically controlled. Mechanical control, however, may require less effort in terms of control technique and may be more reliable than electrical control. Accordingly, the present disclosure is directed to ceramic plungers that may also be mechanically controlled, for example, by a control mechanism including a control sleeve for rotating the plunger. Thus, as mechanical control of fuel pumps which use a plunger is more reliable and require less effort in terms of control technique, the proposal of the present invention may generally simplify controlling of fuel pumps which use a plunger and which are operated with alternative fuels or low sulphur fuels or sulphur free fuels. In particular, the proposal of the present disclosure may simplify changing over fuel pumps from normal fuel to alternative fuel.

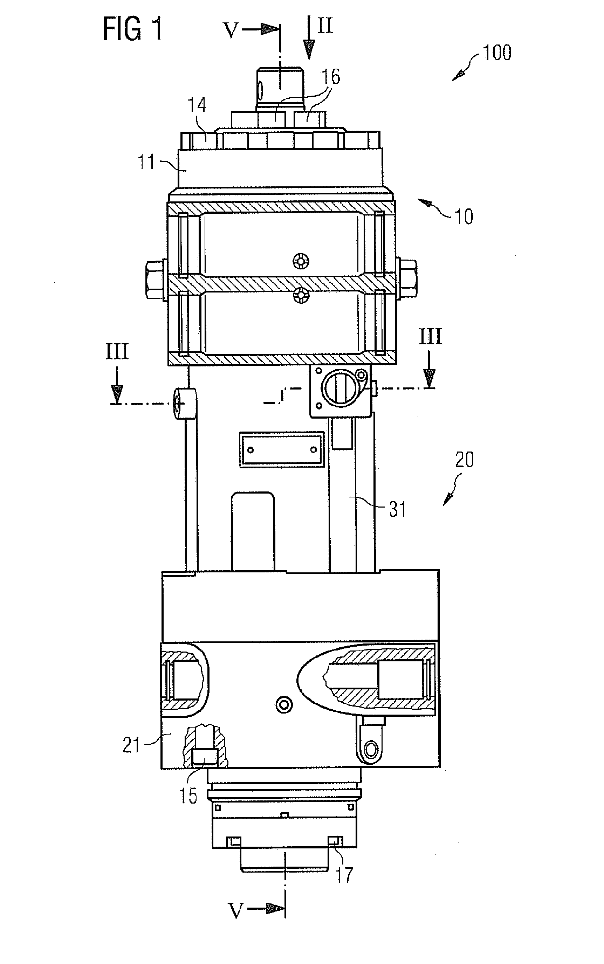

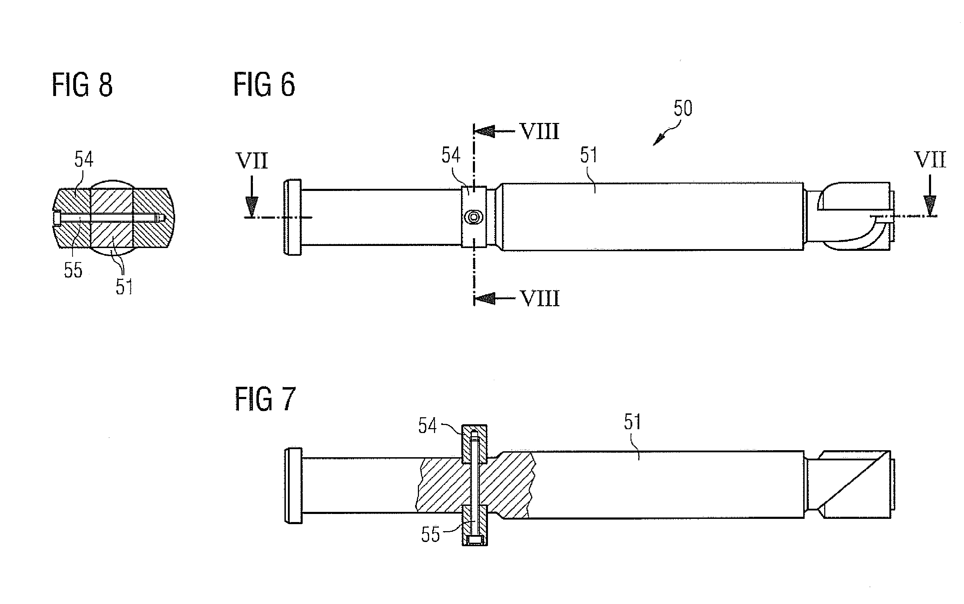

In the following, an exemplary embodiment of a fuel pump having a plunger is generally described in connection with Figs. 1 to 5. In connection with Figs. 6 to 11, two exemplary embodiments of a plunger according to the present disclosure are described. Accordingly, Figs. 1 to 11 describe ceramic plungers which may allow mechanical control the fuel supply volume by use of a control rod rotating a control sleeve which engages a pair of control elements mounted to the ceramic plunger.

In the following, "up" and "down" will be used in accordance with the upward direction and the downward direction, respectively, of Fig. 1. Similarly, "right" and "left" will be used in accordance with the right direction and the left direction, respectively, of Fig. 1, and "front" and "back" will be used in accordance with the forward direction extending out of the plane of Fig. 1 and the backward direction extending into the plane of Fig. 1. Further, "longitudinal direction" will be used in accordance with the extension of the fuel pump in the up-and-down-direction of Fig. 1 and "lateral direction" will be used in accordance with the front-and-back-direction of Fig. 1.

Fig. 1 shows a fuel pump 100. Fuel pump 100 may have a pump head 10 disposed in the upper part of Fig. 1 and having a valve carrier 11. There may also be provided a pump housing 20 disposed below pump head 10 and having a tappet body carrier 21 disposed in the lower part of Fig. 1 and an upper pump housing 31 disposed between pump head 10 and tappet body carrier 21. Pump head 10 may be adapted to be connected to a fuel injector (not shown). Pump housing 20, in particular, tappet body carrier 21 may be adapted to be connected to a crank shaft (not shown) of an engine, to which fuel pump 100 supplies fuel.

Fuel pump 100 may be operated with different kinds of fuel, such as gasoline, diesel, low sulphur fuels or sulphur free fuels, and any other fossil fuels, but also with alternative fuels, such as palm oil, canola oil, oils based on animal fat, or bio fuels such as oils made of non food corps, i.e. waste biomass, e.g., "pyrolysis oils" obtained from the pyrolysis of, e.g., wood or agricultural wastes, such as the stalks of wheat or corn, grass, wood, wood shavings, grapes, and sugar cane.

As Fig. 1 further shows, upper pump housing 31 may be formed substantially cylindrical, whereas valve carrier 11 and tappet body carrier 21 may be formed cap-like. Valve carrier 11 may be connected to upper pump housing 31 by screws 14. Further, valve carrier 11 may be connected to a pump barrel 71 (not shown in Fig. 1) by screws 16. Tappet body carrier 21 may be connected to upper pump housing 31 by screws 15. Additional or alternative fastening elements may be used for connecting valve carrier 11 and tappet body carrier 21 to upper pump housing 31 and pump barrel 71, respectively.

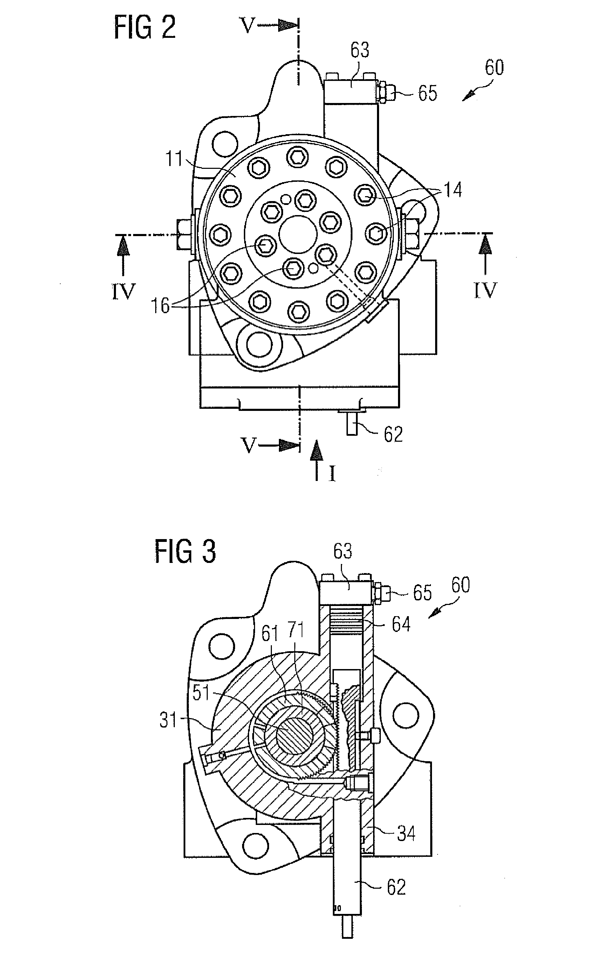

Fig. 2 shows a top view of fuel pump 100 as shown in Fig. 1. As Fig. 2 shows, valve carrier 11 may be connected to upper pump housing 31 as shown in Fig. 1 by twelve screws 14 arranged in a concentric circle around a concentric circle of six screws 16. Screws 14 may serve for fixing pump head 10 to upper pump housing 31. Screws 16 may provide a hydraulic seal between pump head 10 and pump barrel 71. The number of screws 14 and 16 for connecting valve carrier 11 to upper pump housing 31 and pump barrel 71, respectively, may vary dependent on the size of fuel pump 100. Further, Fig. 2 shows a stopper 63 and a control rod 62 both being part of a control mechanism 60 which will be described below.

In Fig. 3, control mechanism 60 is shown. Control mechanism 60 may be arranged in upper pump housing 31 and may have a control sleeve 61, control rod 62, stopper 63, control rod spring 64 and pressurized air port 65.

Control sleeve 61 may be concentrically arranged around pump barrel 71 having a substantial annular cross-section. Pump barrel 71 again may be concentrically arranged around a plunger shaft 51 having a substantially circular cross-section. Between pump barrel 71 and plunger 50, a very small gap, e.g., a clearance, may exist. Control sleeve 61, pump barrel 71 and plunger 50 may extend in an up-and-down-direction (direction which passes perpendicularly out of plane of Fig. 3). Further, control sleeve 61 may have teeth at least partway around its outer circumferential surface. As shown in Fig. 3, about half of the outer circumferential surface (the right half in Fig. 3) of control sleeve 61 may be provided with teeth.

Control rod 62 may be arranged in a front-and-back-direction (up-and-down-direction in Fig. 3) in a part of upper pump housing 31 and, hence, perpendicularly to control sleeve 61, pump barrel 71 and plunger 50. In the following, the part of upper pump housing 31 in which control rod 62 may be arranged is referred to as control rod housing 34. Control rod 62 may protrude from one side of control rod housing 34 (the lower end in Fig. 3). Control rod 62 may also have teeth. In particular, control rod 62 may be partially provided with teeth, e.g., at an area contacting the teeth of control sleeve 61 such that both ends of control rod 62 may not be provided with teeth.

Stopper 63 may be arranged at a back end of control rod housing 34 (the upper end in Fig. 3). Specifically, stopper 63 may be arranged at the end of control rod housing 34 which is disposed opposite to the end of control rod housing 34 where control rod 62 protrudes from control rod housing 34. At the position of stopper 63 in control rod housing 34, pressurized air port 65 may extend through control rod housing 34.

Control rod spring 64 may be arranged between stopper 63 and control rod 62 in control rod housing 34.

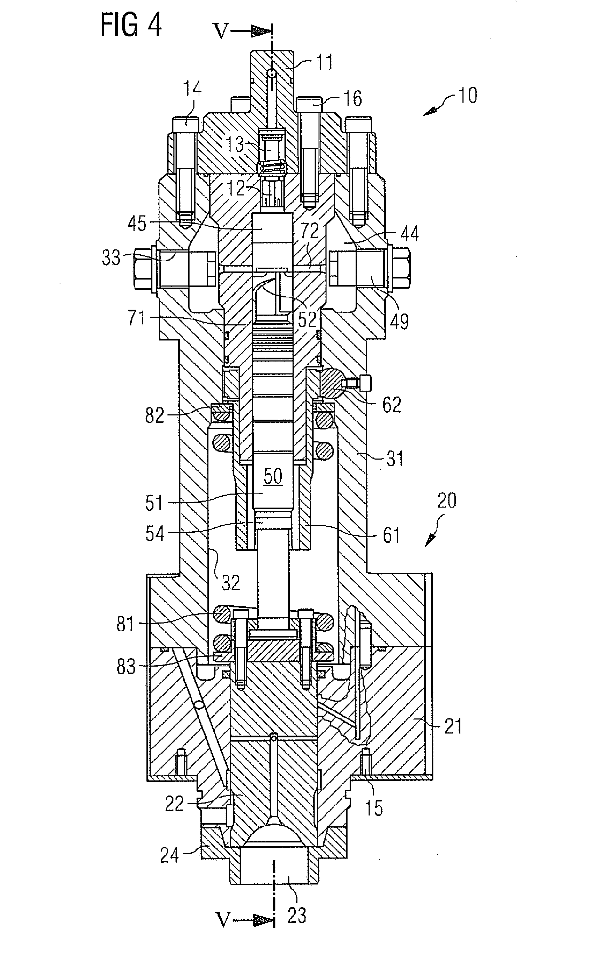

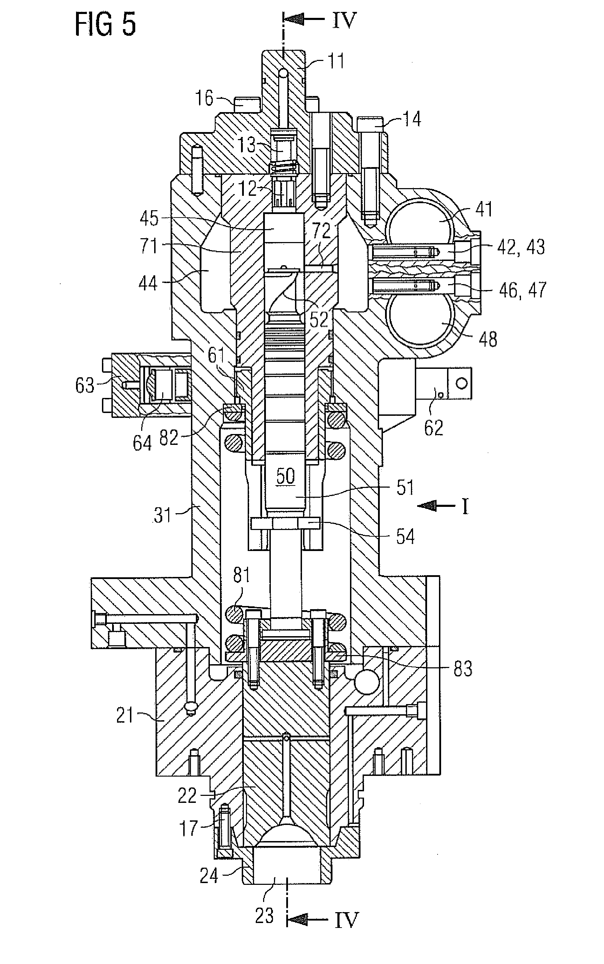

Figs. 4 and 5 show cross-sectional views of fuel pump 100 shifted by 90 degrees to each other.

As already explained with respect to Fig. 1, fuel pump 100 may have valve carrier 11 at pump head 10 and upper pump housing 31 and tappet body carrier 21 at pump housing 20, upper pump housing 31 being disposed between valve carrier 11 and tappet body carrier 21.

As shown in Figs. 4 and 5, valve carrier 11 may accommodate a valve unit including a stroke limiter 13 and a valve 12.

Upper pump housing 31 may be a hollow cylinder, i.e., upper pump housing 31 may have a through hole 32. In through hole 32 of upper pump housing 31, in a direction from the outside to the inside of fuel pump 100, a pump spring 81 (only partially depicted in Figs. 4 and 5), control sleeve 61, pump barrel 71 and plunger 50 may be arranged.

Pump spring 81 may be concentrically arranged around control sleeve 61 in a lower portion of upper pump housing 31 in longitudinal direction of fuel pump 100. Upper end portion of pump spring 81 may abut against upper valve disc 82 and lower end portion of pump spring 81 may sit on lower valve disc 83.

Control sleeve 61 may be arranged in a middle portion of upper pump housing 31 in longitudinal direction of fuel pump 100 and concentrically around pump barrel 71. As Fig. 4 shows, control sleeve 61 may contact control rod 62.

Pump barrel 71 may be concentrically arranged around plunger 50 in an upper portion of upper pump housing 31 in longitudinal direction of fuel pump 100. As shown in Fig. 4, pump barrel 71 may have two ports 72 (one on the right side and one on the left side of pump barrel 71 in Fig. 4) formed in a right-left-direction through an upper part of pump barrel 71 such that the inside of pump barrel 71 may communicate with the outside of pump barrel 71.

As shown in Figs. 4 and 5, plunger 50 may extend almost in the whole upper pump housing 31. Plunger 50 may be made of ceramic. Ceramic has excellent wear resistance properties, a closed surface structure and, due to reduced Van-der-Waals-forces, reduced adhesion forces, e.g., around 20mN/m, preventing fuel-build-up in case fuel is leaking from pumping chamber 45 which is decribed below in between plunger 50 and pump barrel 71. Alternatively, plunger 50 may also be made of any other material, e.g. a ceramic-like material, having excellent wear resistance properties, a closed surface structure and reduced Van-der-Waals-forces.

As further shown in Fig. 4, two baffle body holes 33 (one on the right side and one on the left side of upper pump housing 31 in Fig. 4) may be formed in right-left-direction through an upper part of upper pump housing 31.

Further, as shown in Fig. 5, a fuel inlet opening 41, a fuel inlet passage 43, a fuel supply gallery 44, a pumping chamber 45, a fuel outlet passage 47 and a fuel outlet opening 48 may be formed in upper pump housing 31. Fuel inlet passage 43 and fuel outlet passage 47 may extend in a front-back-direction (right-left-direction in Fig. 5). In fuel inlet passage 43 a fuel inlet throttle screw 42 and in fuel outlet passage 47 a fuel outlet throttle screw 46 may be arranged. Fuel supply gallery 44 may be an annular space concentrically arranged around an upper part of pump barrel 71.

Pumping chamber 45 may be arranged within an upper part of pump barrel 71. Pumping chamber 45 may be connected to fuel supply gallery 44 via baffle body holes 33. Fuel supply gallery 44 again may be connected to fuel inlet opening 41 and fuel outlet opening 48 via fuel inlet passage 43 and fuel outlet passage 47, respectively. Further, each baffle body hole 33 may be provided with a baffle body 49.

Tappet body carrier 21 may be cap-like. Within tappet body carrier 21, tappet body 22 having a camshaft guiding structure 23 may be arranged. Tappet body carrier 21 may be connected to a thrust piece 24 by screws 17.

As shown in Fig. 5, plunger 50 may have a plunger shaft 51, a control edge 52 at an upper portion of the plunger shaft 51 and at least one control element 54 at a lower portion of the plunger shaft 51. Control edge 52 may be a groove formed in the upper circumferential surface of plunger 50. As Figs. 4 and 5 show, control edge 52 may be curved. Control edge 52 may also have any other configuration suitable for controlling the fuel supply volume from fuel pump 100 to an engine.

In the embodiment shown in Fig. 5, plunger 50 may have a pair of control elements 54. The pair of control elements 54 may be formed as extensions arranged perpendicularly to the longitudinal direction of plunger shaft 51. The pair of control elements 54 may be attached to plunger shaft 51 such that the pair of control elements 54 may protrude in the front-and-back-direction (right-left-direction in Fig. 5) perpendicularly to the longitudinal direction of plunger shaft 51. The surface of each control element 54 contacting plunger 51 may be referred to as a control element side contact surface of control element 54. The surfaces of plunger 51 where the pair of control elements 54 is attached may be referred to as a plunger side contact surface.

The pair of control elements 54 may interact with control sleeve 61. In particular, control sleeve 61 may have two longitudinal slots (not shown) into which the pair of control elements 54 may reach with their outer ends.

Figs. 6 to 8 show a first embodiment of plunger 50 according to the present disclosure. As Figs. 6 and 7 show, plunger shaft 51 may be substantially cylindrically formed. Further, each of control elements 54 may be formed like an extension, e.g., a planar extension, protruding perpendicular to plunger shaft 51. In the cut view shown in Fig. 8, each control element 54 may be formed substantially rectangular, the side facing away from plunger 50 (the outermost right or left side of control elements 54 in Fig. 8) being curved outwardly.

At the position in longitudinal direction of plunger 50 where the pair of control elements 54 is arranged, the surface of plunger shaft 51 may be machined, e.g., grinded and flattened, respectively, such that plunger shaft 51 may have two parallel side surfaces acting as plunger side contact surfaces. Due to the parallel side surfaces of plunger shaft 51, the flat side of each control element 54 opposing the curved side of each control element 54 may contact plunger shaft 51 in a two-dimensional manner.

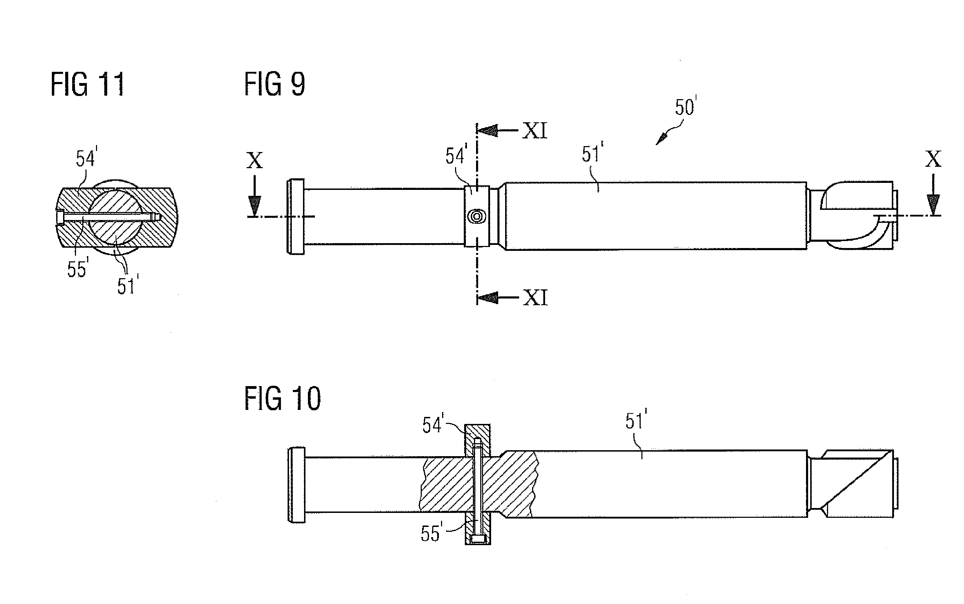

Figs. 9 to 11 show a further embodiment of plunger 50' according to the present disclosure. As Figs. 9 and 10 show, plunger 50' may have a plunger shaft 51' substantially cylindrically formed. Further, plunger 50' may have a pair of control elements 54'. As Fig. 10 shows, each of control elements 54' may be formed like an extension protruding perpendicularly to plunger shaft 51'. Further, as Fig. 11 shows, each control element 54' may be formed substantially rectangular, the side contacting plunger shaft 51' and the side opposing the side contacting plunger shaft 51' being curved outwardly, whereas the other two sides are straight and parallel, such that the one of the curved sides of control element 54' to be attached to plunger 50' is formed concave.

In contrast to plunger 50, the surface of plunger shaft 51' may not be grinded and flattened, respectively, at the position where the pair of control elements 54' is arranged, but may have a convex shape, e.g., a circular cross-section. Accordingly, the concave side of each of control elements 54' substantially has a curved shaped corresponding to the curved shaped of plunger plunger shaft 51' at the position where each of control elements 54' is attached to plunger shaft 51'.

Additionally or alternatively, control elements 54, 54' may have various other embodiments allowing for rotating plunger 50, 50' by transmitting a rotational force of control sleeve 61 to plunger 50, 50'. For instance, control element 54, 54' may be formed triangular, e.g., as a right-angled triangle or a triangle encompassing an obtuse angle or an acute angle. In this embodiment, the side of the triangle contacting plunger shaft 51 may be formed even or concave. Further, the sides of control elements 54, 54' contacting plunger shaft 51, 51' may be partially formed concave and even. In other words, the side of control elements 54, 54' contacting plunger shaft 51, 51' may have even edge portions and a concave middle portion, such as a semi-circular or a triangled concavity. That is, the concavity may not extend over the whole side of control element 54, 54' contacting plunger shaft 51, 51'.

Further, plunger 50, 50' may also be provided with only one of control elements 54, 54' or more than two control elements 54, 54' which may be formed as described above. In particular, plunger 50, 50' may be provided with three control elements 54, 54'. In case three control elements 54, 54' are used, the control elements 54, 54' may be arranged at the same position along the longitudinal direction of plunger 50, 50' around plunger shaft 51, 51', e.g., displaced by 120° to each other. Alternatively, the three control elements 54, 54' may be arranged at different positions along the longitudinal direction of plunger shaft 51, 51', aligned in a row or displaced by certain angles. Alternatively, two of the three control elements 54, 54' may be arranged at the same position along the longitudinal direction of plunger shaft 51, 51' and the third of the three control elements 54, 54' may be arranged at a position in longitudinal direction of plunger shaft 51, 51' other than the position of the two other control elements 54, 54', the third control element 54, 54' being aligned to one of the two other control elements 54, 54' or displaced by a certain angle to the two other control elements 54, 54'. Similarly, four, five, six or more control elements 54, 54' may be arranged at plunger 50, 50'. In other words, in case more than two control elements 54, 54' are used, control elements 54, 54' may be arranged in pairs at the same position in the longitudinal direction of plunger shaft 51, 51' and/or at least partially arranged at different positions along the longitudinal direction of plunger shaft 51, 51'. Additionally or alternatively, in this case, control elements 54, 54' may be aligned to each other or displaced to each other by some degrees, such as 25°, 50°, 75°, 90° or 180°, along the longitudinal direction of plunger shaft 51, 51'.

In the above described embodiments, control elements 54, 54' may be mounted to the plunger shaft 51, 51' by one screw 55, 55'. Screw 55, 55' may be a precision screw. Alternatively, two or more screws may be used for mounting control elements 54, 54' to plunger shaft 51, 51'. For instance, only one precision screw 55, 55' may be used to attach two control elements 54, 54' to plunger shaft 51, 51'. In other words, one screw 55, 55' may interact with two or more control elements 54, 54'. The pressure force of screw 55, 55' may act perpendicularly to the plunger side contact surface and the control element contact surface. The pressure force of precision screw 55, 55' may be larger than the force required for rotating plunger 50, 50'. In other words, the clamping force or the torque of screw 55, 55' may be chosen such that the pair of control elements 54, 54' resists the force and torque, respectively, applied from control sleeve 61 when rotating plunger 50, 50', e.g., such that control elements 54, 54' are not loosened from plunger shaft 51, 51' when plunger 50, 50' is rotated. For instance, in case the force applied from control sleeve 61 may be about 8 to 35 Newton [N], depending on the size of fuel pump 100, the clamping force of screw 55, 55' may be greater than 8 to 35 N. In case the torque, with which screw 55, 55' is tightened, may be about 4.2 to 10.6 Newton meter [Nm], depending on the size of screw 55, 55', the torque applied from control sleeve 61 may be less than 4.2 to 10.6 when plunger 50, 50' is rotated. A torque of 4.2 Nm may, e.g., be realized by a screw 55, 55' sized M4. A torque of 7.1 Nm may, e.g., be realized by a screw 55, 55' sized M5. A torque of 10.6 Nm may, e.g., be realized by a screw 55, 55' sized M6. However, as the size of screw 55, 55' depends on the size of fuel pump 100, other screw sizes for screws 55, 55' may be used.

For clamping control elements 54, 54' to plunger shaft 51, 51', control elements 54, 54' may be provided with a threaded precision hole, whereas plunger shaft 51, 51' may be provided with a precision bore. Alternatively, plunger shaft 51, 51' may have a threaded precision hole or a precision bore in which a precision thread bushing is inserted. In this case, control element 54, 54' may have a precision bore, which may be or may not be threaded. The precision bore and the precision hole, respectively, may be formed in the respective contact surfaces of control element 54, 54' and plunger 50, 50' and may extend perpendicular or in any other angle to the respective contact surface of control element 54, 54' and plunger 50, 50'.

Further, the pair of control elements 54, 54' may be made of a metal material or a ceramic material. The surface of control elements 54, 54' may be protected by being coated. Coating may reduce wear and tear between control elements 54, 54' and the control sleeve 61 and, thus, may serve for enhancing the lift-time of plunger 50, 50'. For example, control elements 54, 54' may be coated with chromium nitride (CrN), titanium nitride (TiN), titanium carbide (TiC), aluminium titanium chromium nitride (AlTiCrN), titanium chromium nitride (TiCrN), aluminium titanium nitride (AlTiN), titanium aluminium nitride (TiAIN), titanium dioxide (TiO2) or titanium(IV)-oxide, tungsten carbide coating (WC/C, WCC), possibly with a CrN intermediate layer, diamond like carbon (DLC). A further coating may be titanium carbon nitride (TiCN). Alternativly, other coatings or layer materials suitable to reduce wear between control elements 54, 54' and control sleeve 61 may be used. In case of metal material, the pair of control elements 54, 54' may be made of steel having a good resistance against pressure loads, tensile loads and shear stress. In case of ceramic material, the pair of control elements 54, 54' may be made of ceramic material being manufactured by sinter processing and, additionally, by hot isostatic pressing (HIP) of the finished ceramic control elements 54, 54'. With HIP, non-porous ceramic materials having a highly protected surface and a higher surface density for technically challenging applications may be produced. The pair of control elements 54, 54' may also be made of any other material sufficiently resisting the applied pressure loads, tensile loads and shear stress.

In the embodiments described above, plunger shaft 51, 51' has a larger diameter at the portion being located above control element 54, 54' than at the portion below control element 54, 54'. The side of plunger shaft 51, 51' having the large diameter is called fuel side and the side of plunger shaft 51, 51' having the small diameter is called control side.

### Industrial Applicability

During operation of fuel pump 100, fuel stored in a fuel reservoir, such as a tank (not shown), may enter fuel pump 100 via fuel inlet opening 41, wherein the fuel may be forced by a further fuel pump (not shown).

Depending on the load condition (acceleration, constant speed driving, deceleration), the engine may require different fuel supply volumes. Accordingly, the volume of fuel supplied to a fuel injector may have to be adjusted as soon as the load condition and, thus, the engine load is changed. For adjusting the fuel supply volume, plunger 50, 50' may be provided with control edge 52 which may be formed as a groove which is obliquely arranged along the circumference at an upper end of the plunger and which may be in communication with pumping chamber 45 and at least one of ports 72 for discharging surplus fuel. By rotating plunger 50, 50' around its longitudinal axis, the stroke of plunger 50, 50' until control edge 52 may establish a communication between pumping chamber 45 and at least one of ports 72 for discharging surplus fuel may be changed. For rotating plunger 50, 50', plunger 50, 50' may have at least one control element 54, 54' connected to control sleeve 61 which is rotated by control rod 62 engaging control sleeve 61 via teeth.

From fuel inlet opening 41, the fuel may flow through fuel inlet passage 43 into fuel supply gallery 44 and from fuel supply gallery 44 through ports 72 into pumping chamber 45. Fuel inlet throttle screw 42 and fuel outlet throttle screw 46 may serve as fuel flow restrictor for limiting the fuel flow speed in order to avoid pressure variations in the fuel.

In pumping chamber 45, the fuel may be pressurized and supplied upwards through valve 12 and stroke limiter 13 to a combustion chamber (not shown) of an engine by plunger 50, 50' reciprocating in pumping chamber 45. The reciprocating movement of plunger 50, 50' may be caused by a camshaft (not shown) of the engine. In particular, pump spring 81 may bias and force tappet body 22 downwards to the camshaft via a camshaft roller (not shown) which may be arranged within camshaft guiding structure 23. As soon as the camshaft is rotating, tappet body 22 and plunger 50, 50' may be lifted in the direction of pumping chamber 45 by the upwards movement of the roller once per revolution of the camshaft and lowered to its initial position by the biasing force of pump spring 81.

Depending on the current load condition, the engine may need more or less fuel to respond to operative load changes. For instance, when an operator increases the load of the engine and, e.g., requires acceleration, the engine may need more fuel than may be otherwise needed if the operator selects to drive the engine with a constant speed and load (steady operation). Conversely, when the operator reduces the load or driving speed, the engine may need less fuel than may otherwise be required if the operator maintains steady operation of the engine.

The volume of fuel supplied from fuel pump 100 to the combustion chamber of the engine is controlled by control mechanism 60. For instance, control rod 62 may be connected to a governor (not shown) and may be operated linearly, in case the operator changes the speed/load of the engine. The governor may be an engine speed controller, which may operate control rod 62 by comparing a current engine speed with a target engine speed. Stopper 63 and control rod spring 64 may be used if the engine is stopped. In this case, pressurized air may be fed through pressurized air port 65. The pressurized air may push control rod 62 to the outermost position, e.g., the lowest position in Fig. 3 and, thus, the initial position of control rod 62. As control rod 62 may engage control sleeve 61 via teeth, control sleeve 61 is rotated if control rod 62 is linearly moved. Further, as plunger 50, 50' is connected with control sleeve 61 via the pair of control elements 54, 54' being arranged in the two linear slots of control sleeve 61, plunger 50, 50' may also be rotated.

Due to the rotation of plunger 50, 50', control edge 52 may be displaced towards or away from one of ports 72. Through control edge 52, surplus fuel (which is not supplied to the engine) may be discharged via at least one of ports 72, fuel supply gallery 44 and fuel outlet passage 47 to fuel outlet opening 48 and into the tank (not shown). As control edge 52 may be formed as a curved groove, the stroke of plunger 50, 50', required such that fuel may flow from the pumping chamber 45 through the control edge 52 (surplus fuel), may change with the rotation of plunger 50, 50'. For instance, in case plunger 50, 50' shown in Figs. 6 and 9, respectively, is rotated clockwise (when viewed from the top), more fuel may be supplied from fuel pump 100 to the combustion chamber of the engine than in case plunger 50, 50' is rotated counter-clockwise. In other words, the earlier control edge 52 overlaps the ports 72, e.g., reaches the ports 72, the less fuel is supplied to the engine and vice versa.

When control edge 52 reaches at least one of ports 72, the pressure in fuel supply gallery 44 may decrease. Due to the decreasing pressure, the fuel in fuel supply gallery 44 moves in the outward direction of fuel pump 100 with high speed causing a pressure wave and cavitation. To absorb the force of the pressure wave, baffle bodies 49 may protrude in fuel supply gallery 44. As shown in Fig. 4, baffle bodies 49 may be screws. However, baffle bodies 49 may also be any other type of component configured to protrude into fuel supply gallery 44 in order to absorb the force of the pressure wave described above. The fuel not discharged as surplus fuel may be pressurized in pumping chamber 45 and supplied through the valve unit including valve 12 and stroke limiter 13 serving as flow restrictor for preventing pressure variations in the fuel.

As plunger 50, 50' may be made of ceramic, improvements may be made to its wear resistance, resistance against fuel with low pH-values such as alternative fuels or low sulphur fuels and resistance against fuel build-up covering the surface of the plunger shaft.

In particular, with respect to wear resistance, control edge 52, 52' of plunger 50, 50' may be built stable and may not be subjected to cavitations, i.e., to pore formation by negative pressure due to the abrupt pressure decrease in fuel pump 100 occurring with each pumping operation. Further, plunger 50, 50' may have self lubricating properties (good tribology) such that no additional lubrication is necessary to avoid seizing of plunger 50, 50' within pump barrel 71 of fuel pump 100 or to avoid a significant reduction of the plunger 50, 50' diameter.

Furthermore, with respect to resistance against fuel build-up, plunger 50, 50' may have reduced Van-der-Waals-forces, i.e., reduced surface adhesion forces, such that fuel leaking from pumping chamber 45 in between plunger 50, 50' and pump barrel 71 sticks less to the surface of plunger 50, 50' and, hence, reduces fuel build-up (polymerization of fuel) covering the surface of the plunger shaft and reducing movability of the plunger in the pump housing. Furthermore, the clearance between barrel 71 and plunger 50, 50' may be reduced to a minimum. This clearance reduction may additionally significantly reduce the amount of fuel leaking between plunger 50, 50' and pump barrel 71.

Additional to the advantages of ceramic material, the rotation of plunger 50, 50' can be mechanically controlled, because a control element, e.g., the pair of control elements 54, 54', may be of a metal or ceramic material and may be connected to plunger 50, 50' such that, as plunger shaft 51, 51' and control elements 54, 54' are manufactured separately, plunger 50, 50' is easy to manufacture. The connection between plunger shaft 51, 51' and control elements 54, 54' may be constructed such that it resists the force and torque applied from control sleeve 61 to plunger 50, 50' during rotating operation of plunger 50, 50'.

Accordingly, by using plunger 50, 50' in fuel pump 100, on the one hand, life-time of plunger 50, 50' and, hence, of fuel pump 100 may be prolonged and extended, respectively, and, on the other hand, control of the fuel supply volume may be easy and more reliable.

In some embodiments, the at least one control element 54, 54' may be made of a metal material or a ceramic material.

In some embodiments, the at least one control element 54, 54' may be coated with a carbon-, tungsten-, titanium-, aluminium- or chromium-based coating, e.g., a tungsten carbide coating or a diamond like carbon coating.

In some embodiments, the contacting surfaces of the plunger 50, 50' and the at least one control element 54, 54' may be shaped as at least partly planar surfaces.

In some embodiments, the contacting surfaces of the plunger 50, 50' and the at least one control element 54, 54' may be shaped as a at least partly convex surface and a at least partly concave surface, respectively.

In some embodiments, the contacting surfaces of the plunger 50, 50' and the at least one control element 54, 54' may extend around at least 25%, 30 %, 35 %, 40 %, 45 %, or 50 % of the circumference of the plunger 50, 50'.

In some embodiments, the at least one control element 54, 54' may be attached by at least one fastening element 55, 55', e.g., a precision screw, clamping the at least one control element 54, 54' to plunger shaft 51, 51'.

In some embodiments, the torque of the fastening element 55, 55' may be greater than the torque for rotating the plunger 50, 50', e.g., greater than 4Nm.

In some embodiments, plunger 50, 50'may comprise a further control element 54, 54' forming a pair of control elements 54, 54' attached at opposite sides of the plunger shaft 50, 50'.

In some embodiments, at least one fastening element 55, 55' may interact with the pair of control elements 54, 54' for clamping the pair of control elements 54, 54' to the plunger shaft 51, 51'.

In some embodiments, plunger shaft 51, 51' may have at least one control edge 52, the control edge 52, e.g., being curved.

In some embodiments, control edge 52 may be formed as a groove.

In some embodiments, plunger shaft 51, 51' may have a control side and a fuel side, the control side and the fuel side being located at different portions of plunger shaft 51, 51' in longitudinal direction thereof, the at least one control element 54, 54' being located on the control side, and the at least one control edge 52, 52' being located on the fuel side.

In some embodiments, plunger shaft 51, 51' may be formed in a stepped manner, the diameter of plunger shaft 51, 51' at fuel side is greater than the diameter of plunger shaft 51, 51' at control side.

In some embodiments, at least one control element 54, 54' may be at least one thread and the plunger shaft 51, 51' has at least one bore for attaching the at least one control element 54, 54' to plunger shaft 51, 51' by the at least one fastening element 55, 55'.

In some embodiments, fuel pump 100 may comprise plunger 50, 50'.

In one aspect of the present disclosure, a method for controlling the fuel supply volume of fuel pump 100 may comprise the following steps: linearly moving control rod 62 depending on a load condition, thereby rotating control sleeve 61 and plunger 50, 50' by applying a force to control elements 54, 54' attached to plunger 50, 50' and being in contact with control sleeve 61, linearly moving plunger 50, 50' by use of a camshaft of an engine, wherein, when control edge 52 of plunger 50, 50' reaches port 72 of fuel pump 100, surplus fuel which is not supplied to the engine is discharged from pumping chamber 45 through control edge 52 to port 72 and to the outside of fuel pump 100 via fuel supply gallery 44, fuel outlet passage 47 and fuel outlet opening 48.

Although the preferred embodiments of this invention have been described herein, improvements and modifications may be incorporated without departing from the scope of the following claims.

## Claims

1. A plunger (50, 50') for axial movement and rotation within a pump barrel (71) of a fuel pump (100), the plunger (50, 50') comprising:
a plunger shaft (51, 51') made of a ceramic material, and
at least one control element (54, 54') for controlling a rotational angle of the plunger (50, 50'), wherein the at least one control element (54, 54') is attached to the plunger shaft (51, 51').

2. The plunger (50, 50') according to claim1, wherein the at least one control element (54, 54') is made of a metal material or a ceramic material.

3. The plunger (50, 50') according to claims 1 or 2, wherein the at least one control element (54, 54') is coated with a carbon-, tungsten-, titanium-, aluminium- or chromium-based coating, e.g., a tungsten carbide coating or a diamond like carbon coating.

4. The plunger (50, 50') according any one of the preceding claims, wherein contacting surfaces of the plunger (50, 50') and the at least one control element (54, 54') are shaped as at least partly planar surfaces.

5. The plunger (50, 50') according to any one of claims 1 to 3, wherein contacting surfaces of the plunger (50, 50') and the at least one control element (54, 54') are shaped as a at least partly convex surface and a at least partly concave surface, respectively.

6. The plunger (50, 50') according to claim 5, wherein the contacting surfaces of the plunger (50, 50') and the at least one control element (54, 54') extend around at least 25%, 30 %, 35 %, 40 %, 45 %, or 50 % of the circumference of the plunger (50, 50').

7. The plunger (50, 50') according to any one of the preceding claims, wherein the at least one control element (54, 54') is attached by at least one fastening element (55, 55'), e.g., a precision screw, the at least one fastening element (55, 55') interacting with the at least one control element (54, 54') for clamping the at least one control element (54, 54') to the plunger shaft (51,51').

8. The plunger (50, 50') according to any one of the preceding claims, comprising a further control element (54, 54') forming a pair of control elements (54, 54') attached at opposite sides of the plunger shaft (50, 50').

9. The plunger (50, 50') according to claim 8, wherein at least one fastening element (55, 55') interacts with the pair of control elements (54, 54') for clamping the pair of control elements (54, 54') to the plunger shaft (51,51').

10. The plunger (50, 50') according to any one of claims 7 to 9, wherein the fastening element (55, 55') has a greater torque than a torque required for rotating the plunger (50, 50'), e.g., greater than 4Nm.

11. The plunger (50, 50') according to any one of the preceding claims, wherein the plunger shaft (51, 51') has at least one control edge (52), the control edge (52), e.g., being curved and/or formed as a groove.

12. The plunger (50, 50') according to claim 11, wherein the plunger shaft (51, 51') has a control side and a fuel side, the control side and the fuel side being located at different portions of the plunger shaft (51, 51') in longitudinal direction thereof,
the at least one control element (54, 54') being located on the control side, and the at least one control edge (52) being located on the fuel side.

13. The plunger (50, 50') according to claim 12, wherein the plunger shaft (51, 51') is formed in a stepped manner, the diameter of the plunger shaft (51, 51') at the fuel side is greater than the diameter of the plunger shaft (51, 51') at the control side.

14. The plunger (50, 50') according to any one of claims 7 to 13, wherein the at least one control element (54, 54') has at least one thread and the plunger shaft (51, 51') has at least one bore for attaching the at least one control element (54, 54') to the plunger shaft (51, 51') by the at least one fastening element (55, 55').

15. A fuel pump (100), comprising a plunger (50, 50') according to any one of claims 1 to 14.
